# EUROPEAN PATENT SPECIFICATION

(11) **EP 1 228 098 B1**
(45) Date of publication and mention of the grant of the patent: **27.09.2006**
(21) Application number: 01934689.9
(22) Date of filing: 29.05.2001
(51) Int. Cl.: C08B 1/00, D21C 9/00, D01F 2/02

(54) **METHOD FOR THE MANUFACTURE OF FIBRES, FILM AND OTHER PRODUCTS FROM MODIFIED SOLUBLE CELLULOSE**
VERFAHREN ZUR HERSTELLUNG VON FASERN, FILMEN UND ANDEREN PRODUKTEN AUS MODIFIZIERTER LÖSLICHER ZELLULOSE
PROCEDE DE FABRICATION DE FIBRES, DE FILMS ET D'AUTRES PRODUITS A PARTIR DE CELLULOSE SOLUBLE MODIFIEE

(30) Priority: 12.06.2000 PL 34071500
(43) Date of publication of application: 07.08.2002
(73) Proprietor: Instytut Biopolimeròw I Wlókien Chemicznych, 90-570 Lodz (PL)
(72) Inventor: STRUSZCZYK, Henryk, PL-95-100 Zgierz (PL); CIECHANSKA, Danuta, PL-93-355 Lodz (PL); WAWRO, Dariusz, PL-91-404 Lodz (PL); URBANOWSKI, Alojzy, PL-92-015 Lodz (PL); GUZINSKA, Krystyna, PL-91-129 Lodz (PL); WRZESNIEWSKA-TOSIK, Krystyna, PL-95-200 Pabianice (PL)
(74) Representative: Brandenburg, Thomas
(86) International application number: PCT/PL2001/000047
(87) International publication number: WO 2001/096402

(56) References cited:
- EP-A- 0 918 101
- WO-A-99/16960
- DATABASE WPI Week 198808 Derwent Publications Ltd., London, GB; AN 1988-052833 XP002177522 "Alkaline dope of cellulose - is obtd. by treating cellulose with saccharide degradation enzymes followed by dissolving in alkaline soln." & JP 63 008401 A (ASAHI CHEM IND CO LTD), 14 January 1988 (1988-01-14)
- DATABASE CHEMABS [Online] CHEMICAL ABSTRACTS SERVICE, COLUMBUS, OHIO, US; "Making fibers, foils and other products from dissolved cellulose" retrieved from STN Database accession no. 125:198898 CA XP002177520 & PL 167 776 A (INSTYTUT WLOKIEN CHEMICZNYCH) 30 November 1995 (1995-11-30) cited in the application
- DATABASE CHEMABS [Online] CHEMICAL ABSTRACTS SERVICE; COLUMBUS; OHIO; US; "Manufacture of alkali-soluble cellulose pulp using cellulose-degrading enzymes" retrieved from STN Database accession no. 124:235307 CA XP002177521 & PL 167 519 A (INSTYTUT WLOKIEN CHEMICZNYCH) 30 September 1995 (1995-09-30) cited in the application

## Description

Subject of the invention is a method to produce fibres, film and other products from modified, soluble cellulose.

From the Polish Patent 167519 a method is well-known to produce a soluble cellulose by a direct treatment of cellulose pulp with enzymes type cellulases derived from the fermentation of the Aspergillus niger IBT fungi with following characteristic: CMC activity - 0,1-15 U/cm³; FPA activity 0,01-1,0 U/cm³; β-glucoside activity 0,1-15,0 U/ cm³ and proportion of CMC to FPA activity in the 1-100 range. The enzymatically treated cellulose shows a dissolving ability in hydroxides of alkali metals.

From the Polish Patent 167776 a method is well-known to produce fibres, film and other products from soluble cellulose. The soluble cellulose obtained by enzymatic treatment with cellulases from Aspergillus niger IBT having following characteristics: average polymerisation degree D̅P_{w} at least 100, water retention value WRV in the 50-100% range, energy of hydrogen bonds E_{H} below 16 kJ/mol is mixed at - 10°C to 10°C with an aqueous solution of alkali metal hydroxides with concentration 5-15% during 15-2880 minutes to achieve a homogeneous solution of cellulose. The alkaline solution of cellulose is filtered and deaerated and subjected to coagulation in an acidic bath consisting of an inorganic or/and organic acid solution. The obtained product is washed with water to attain a neutral reaction and is possibly dried.

From the German Patent DE 19624867 a method is also well-known to produce cellulose pulps with improved solubility in aqueous solutions of N,N-methylmorpholine oxide. The aqueous suspension of cellulose pulp is at first treated with cellulases and/or xylanases with activity at least 0,01 U/cm³ at temperatures 20 to 60°C and pH 3,5 to 7,0. The cellulases were derived from Aspergillus niger while the xylanase from Trichoderma viride fungi.

From the German Patent DE 19624866 a method is well-known for the manufacture of cellulose pulp with improved activity for the production of cellulose acetate. An aqueous solution is enzymatically treated with cellulases from Aspergillus niger and/or xylanases from Trichoderma viride with enzyme activity at least 0,01 U/cm³ at temperature 20-60°C and pH 3,5-7,0.

The solubility of cellulose made according to well-known enzymatic methods is usually in the 70-90 % range and its solutions show poor stability, low α-cellulose concentration and, at the same time, very high viscosity. The solutions are stable usually at temperatures below 0°C, while the manufactured products like fibres or film have poor mechanical properties. Manufacturing procedures are difficult which results from the properties of the spinning solution like high viscosity, low temperature, poor stability and filterability.

From the European Patent Appl. EP 0918101 well known is also a hydrothermal method to produce cellulosic mouldings from soluble cellulose. The forming of cellulose products such as fibres, film etc. comprises a hydrothermal treatment of the cellulose at 100-200°C and 0,1-1,5 MPa with water/cellulose ratio of at least 1, dissolving the treated cellulose at a temperature of at least 0°C in aqueous alkali with possible addition of zinc compounds to give a homogeneous solution with 5-10wt% cellulose and not more than 10wt% alkali hydroxide and coagulating the solution with a 1-30wt% aqueous solution of inorganic and/or organic acid. Before the hydrothermal treatment the initial cellulose can by subjected to a pre-treatment by defibration and swelling.

The method for the manufacture of fibres, film and other products, according to this invention, consist in that the starting cellulose pulp is subjected to a pre-treatment by swelling in aqueous solution of cellulases and/or xylanases, preferable originated from Aspergillus niger or Trichoderma reesei with endo-1,4-β-glucanase activity not lower than 0,05 U/cm³ and endo-1,4-β-xylanase activity not lower than 0,1 U/cm³, during 1-1440 minutes at 10-60 °C. Next, after the removal of solution, the cellulose pulp is shredded at 20-40 °C during 1-360 minutes. The pre-treated cellulose pulp is enzymatically treated with an aqueous solution of an enzyme complex of cellulases type, preferable originated from the Aspergillus niger or Trichoderma reesei fungi, with endo-1,4-β-glucanase activity not lower than 0,1 U/cm³, β-glucosidase activity not lower than 0,01 U/cm³, filter paper activity FPA not lower than 0,01 U/cm³ and/or xylanases, preferably originated from fungi Trichoderma reesei, with endo-1,4-β-xylanase activity not lower than 0,5 U/cm³. Surplus of the enzyme - containing solution is next removed and the enzymes remaining in the pulp are deactivated by water - washing at temperature above 60°C. The obtained modified cellulose pulp is characterized by average polymerisation degree D̅P_{W} not lower than 200, water retention value WRV not lower than 50 %, energy of hydrogen bonds E_{H} not higher than 20 kJ/mol, polydispersity degree Pd not lower than 2, and water content not lower than 5 %. The pulp is then dissolved in an aqueous solution of hydroxides of alkali metals, preferably sodium hydroxide with concentration not lower than 5wt% at a temperature not lower than 0°C, during at least 1 minute. The alkaline solution of cellulose is next filtered and deaerated and, afterwards, subjected to coagulation in water or aqueous solution of an acid with concentration not lower than 1 wt%. The product is thereafter washed out with water to a neutral reaction and optionally dried.

The enzymatic treatment of cellulose pulp, according to the invention, is preferably accomplished in an aqueous suspension of an enzymatic complex with the cellulose concentration not lower than 0,1 % with continuous stirring and/or continuous recirculation of the enzyme liquor at temperature not lower than 10°C, during at least 1 minute, at pH not higher than 7.

The surplus of the enzymatic complex after the enzymatic treatment can be, accordingly to the invention, recirculated to the process with supplement of fresh enzyme to keep the activity constant.

The aqueous solution of alkali metal hydroxides can contain the addition of zinc oxide not lower than 0,01% and/or urea not lower than 0,1 %.

According to the invention, the cellulose pulp is dissolved in aqueous solutions of alkali metals hydroxides, preferably with vigorous agitation with a speed not lower than 100 rpm and temperature increasing up to 5-12°C at the end of dissolving.

During the coagulation of fibres and film, according to the invention, a drawing is applied not lower than 10%.

The method according to the invention is environment - friendly as the cellulose is enzymatically processed and the products such as sausage casings, beads or fibrids are formed from an alkali - soluble cellulose.

The attenuation of hydrogen bonds in the enzymatically modified cellulose makes the hydroxyl groups in the cellulose prone to solvatation resulting primarily from the weakening and/or destruction of the intermolecular bonds followed by intermolecular bonds. As a result of such processes stable alkaline cellulose solutions are originated. An advantage of the process is a controlled activation and degradation of cellulose caused by the action of cellulase and/or xylanase leading to a modified, alkali - soluble cellulose pulp with an assumed molecular, super molecular and morphological structure.

Owing to the applied mechanical and/or enzymatic treatment which causes swelling of the cellulose and eases the diffusion of enzymes into the capillary system as well as the applied enzymatic treatment with cellulases and/or xylanases, the modified cellulose is characterized by solubility in alkalies exceeding 95 % usually reaching 98-100%. The alkaline solutions are stable at temperatures beyond 0°C and are characterized by high α- cellulose content and viscosity which allows processing. Urea and zinc oxide are applied for the improvement of stability and quality of the solutions.

An advantage of the method is the possibility to recirculate the enzyme solution after the enzymatic treatment of cellulose, thus contributing to better process economy.

The temperature - programmed dissolving of the modified cellulose in alkaline solutions has an evident impact on the quality of the solutions and the properties of obtained products. The forming of fibres, film and other products is accomplished by the coagulation of the alkaline cellulose solution in an acidic bath with simultaneous neutralizing the alkalies contained in the solution. The applied extension, in the case of fibres, film or casings, confers better orientation and improves the structure of the products which leads to better physical - mechanical properties.

The method, according to the invention, is much simpler and safer than well-known methods while the obtained products demonstrate better properties than well-known cellulosic products.

The method according to the invention, is illustrated with following examples not limiting the scope of the invention.

### Example 1.

100 wt parts of a beach wood pulp in sheets was used with following properties: moisture content of 6%, D̅P_{w}=657, WRV=61,6%, α-cellulose content of 94,4%, crystallinity index CrI=68,0%, E_{H}=17,4-24,2 kJ/mol. The pulp was swollen in 800 wt parts of water at 20°C during 30 minutes. Next 718wt parts of the water was removed by pressing and the pulp was shredded in a Wemer - Pfleiderer mill at 20°C during 60 minutes. The ground pulp was dried at 20°C. The pre-treated cellulose was introduced to the reactor with agitator. 1900 wt parts of a cellulose solution in an acetate buffer with pH=4,8 are added. The cellulases were derived from Trichoderma reesei fungi, characterized by endo-1,4-β-glucanase activity of 2,5 U/cm³ filtration paper activity FPA of 0,15 U/cm³, β-glucosidase activity of 0,08 J/ml, while the concentration of the cellulose in the suspension was 5wt%. The enzymatic treatment lasted 180 minutes at 50°C and pH=4,8. The obtained suspension of modified cellulose was filtered, washed with water at 90°C to complete deactivation of the remaining enzyme, followed by several washings with water at 20°C to fully purify the cellulose. The modified cellulose pulp was dried at 30°C to constant weight. 93,8 wt parts of white bio transformed cellulose were obtained with following characteristic: moisture content of 5%, average polymerisation degree D̅P_{w}= 398, water retention value WRV=81,0%, crystallinity index CrI=70,5%, energy of hydrogen bonds E_{H}=12,8-14,5 kJ/mol and solubility degree in 9 % solution of sodium hydroxide Sₐ=99%. To 30 wt parts of such modified cellulose pulp 100 wt parts of water were added and the mixture was cooled down to 1°C and dissolved in 470wt parts of an aqueous solution of sodium hydroxide with 10,2% concentration containing 30 wt parts of urea and 5,3wt parts of ZnO at 0°C. The dissolving lasted 30 min with the agitator at 900 rpm. An alkaline cellulose solution was obtained at 8°C, containing 4,99% of α-cellulose and 8,15% wt sodium hydroxide. The solution had following properties: viscosity at 8°C of 100 seconds, clogging value Kw*=131, stability at 15°C=48 hours. The solution was filtered and deaerated during 10 hours at 15°C. From the solution a cellulosic film was formed in lab-scale at 25°C whereby as coagulation bath a 12% solution of sulphuric acid was used. 30,9 wt parts of a cellulosic film were obtained. The film was 0,028 mm thick with breaking tension 40,0 MPa, elongation at break 5,3% and 8 % moisture content.

### Example 2.

100 wt parts of cellulose with properties as in Example I were shredded as in Example I. Next 182 wt parts of wet cellulose pulp were introduced to a reactor equipped with an agitator and subjected to the action of 1818 wt parts of a cellulases solution in a buffer (pH=4,8). The cellulases were derived from the Trichoderma reesei fungi and was characterized by: endo-1,4-β-glucanase activity of 2,5 U/cm³, filtration paper activity FPA of 0,15 U/cm³, β-glucosidase activity of 0,08 U/cm³. The cellulose concentration in the suspension was 5%. The enzymatic treatment lasted 180 minutes at 50°C and pH=4,8. The obtained cellulose suspension was filtered, washed with water at 90°C to complete deactivation of the remaining enzyme and afterwards washed several times with 20°C water to obtain a pure product. 93,8 wt parts of white, modified cellulose pulp were obtained, characterized by: moisture content 5%, D̅P_{w}=398, WRV= 81,0 %, CrI=70,5%, E_{H}=12,8-14,5 kJ/mol and Sₐ=99%. To 49 wt parts of modified cellulose pulp containing 71,5% of water, 16 parts of water were introduced and cooled down to 0°C. Such prepared pulp was dissolved in 235 wt parts of aqueous sodium hydroxide with 10,2% concentration, containing 15wt parts of urea and 2,65wt parts of ZnO at 0°C. The dissolving time was 30 minutes with agitation speed 1000 rpm. An alkaline cellulose solution was obtained at 7°C, containing 4,47% of α-cellulose and 7,28% of sodium hydroxide characterized by: viscosity at 8°C of 77 seconds, Kw*=156, stability at 15°C of 48 hours. The solution was deaerated during 10 hours at 15°C where after cellulose beads were formed from the solution using a spinneret with 100 capillaries with 1 mm diameter. A solution containing 15 % sulphuric acid and 5% sodium sulphate at 20°C was used as coagulation bath. The formed beads were several times washed with water.
49,6wt parts of beads were produced with 70% water content and WRV=876%.

### Example 3.

100wt parts of cellulose with properties as in Example I were first 30 minutes swollen in 800wt parts of an acetate buffer (pH=4,8). The surplus of the buffer was next squeezed out and the pulp was shredded in an Werner-Pfleiderer mill at 20°C during 60 minutes and afterwards dried at 20°C.
The pre-treated cellulose was introduced to a reactor with agitator and subjected to the action of 1329wt parts of a mixed solution of a xylanases from the Trichoderma reesei strain with endo-1,4-β-xylanase activity at 69,7 U/cm³ and a cellulase from Trichoderma reesei with endo-1,4-β-glucanase activity at 2,5 U/cm³ in the 3 : 1 proportion in a pH=4,8 acetate buffer.
The concentration of cellulose in the suspension was 7%. The enzymatic treatment lasted 2 hours at 50°C and pH=4,8. The obtained cellulose suspension was washed as in Example I. 98wt parts of white modified cellulose were obtained with 7% moisture content, D̅P_{w}=436, WRV=84,0%, CrI=71,2%, E_{H}=11,6-15,2 kJ/mol and Sₐ=96%. To 30wt parts of such cellulose with 5% moisture, 100 parts of water were added and cooled down to 1°C. The cellulose pulp was next dissolved at 0°C in 470 wt parts of a 10,2% aqueous sodium hydroxide, containing 30wt parts of urea and 5,3wt parts of ZnO. The dissolving time was 30 minutes with agitation speed 1000 rpm. An alkaline cellulose solution was obtained at 6,0°C, containing 4,81% of α-cellulose and 8,02% of sodium hydroxide characterized by: viscosity at 8°C of 540 seconds, Kw*=159, and stability at 15°C of 24 hours. The solution was filtered and 15 hours deaerated at 15°C, where after a cellulose film was formed in lab-scale from the solution at 25°C whereby a 12% aqueous sodium of sulphuric acid was used as coagulation bath.
2,99wt parts of cellulosic film were obtained with 8% moisture content characterized by: 0,035 mm thickness and breaking tension of 50,7 MPa and elongation at break 4,4%.

### Example 4.

100wt parts of cellulose with properties as in Example I were first swollen during 1440 minutes in 800wt parts of an acetate buffer (pH=4,8). Next after out - squeezing of the surplus of the buffer the cellulose pulp was shredded in a Werner-Pfleiderer mill during 60 minutes at 20°C. The pre-treated pulp was dried at 20°C. The obtained cellulose pulp in the quantity of 100wt parts was placed in a reactor equipped with agitator and subjected to the action of 1567 wt parts of a mixture composed of the xylanase from the Trichoderma reesei strain with endo-1,4-β-xylanase activity at 69,7 U/cm³ and cellulases from the Trichoderma reeser strain with endo-1,4-β-glucanase activity at 2,5 U/cm³ in the 3 : 1 proportion in an acetate buffer (pH= 4,8) with the 6% concentration of cellulose in the suspension. The time of the enzymatic treatment was 360 minutes at 50°C and pH=4,8. The obtained suspension of cellulose was purified as in Example I.
95.2wt parts of white modified cellulose pulp were obtained with following characteristic: moisture content of 7%, D̅P_{w}=405, WRV=78,0%, CrI=69,8%, E_{H}=12,4-13,9 kJ/mol and Sₐ=98 %. To 24wt parts of the modified cellulose pulp with moisture 5%, 100 parts of water were added and cooled down to 1 °C. The pulp was dissolved in 476wt parts of a 10,2% aqueous sodium hydroxide, containing 30wt parts of urea and 5,3wt parts of ZnO at 0°C. The dissolving time was 30 minutes with agitating speed 900 rpm. An alkaline solution of cellulose was obtained at 6,5°C, containing 3,83% of α-cellulose and 7,84% of sodium hydroxide characterized by viscosity at 8°C of 38 seconds, Kw*=159, and stability at 15°C of 48 hours. The solution was filtered and 10 hours deaerated at 15°C. From the solution a film was formed at 25°C in lab-scale whereby an aqueous 12% solution of sulphuric acid was used as coagulation bath.
25,8wt parts of cellulosic film were obtained with 8% moisture content with following properties: thickness of 0,022 mm, breaking tension 60,3 MPa and elongation at break 7,1 %.

### Example 5.

100wt parts of cellulose with properties as in Example I was swollen during 30 minutes in 800wt parts of a solution of xylanases from the Trichoderma reesei with activity endo-1,4-β-xylanase 69,7 U/cm³ in an acetate buffer at pH=4,8. After out - squeezing the enzyme solution, the cellulose was shredded in a Werner Pfleiderer mill at 20°C during 60 minutes. The cellulose pulp after the mechanical treatment was dried at 20°C. The pre-treated cellulose pulp was placed in a reactor with agitator were it was subjected to the action of 1900wt parts of a solution of cellulases from Aspergillus niger with activity endo-1,4-β-glucanase equal to 1,9 U/cm³. The concentration of cellulose in the solution was 5%. The cellulose was 60 minutes enzyme - treated at 50°C and pH=4,8. The obtained cellulose suspension was washed as in Example I. 95,2wt parts of white bio transformed cellulose were obtained with following characteristic: moisture content of 5%, D̅P_{w}=435, CrI=72,6% E_{H}=13,5-17,5 kJ/mol, WRV=81,5% and Sₐ=96%. To 30wt parts of dried, bio transformed cellulose pulp with 5,0% moisture, 100 parts of water were introduced and the mix was quenched to 0°C. The cellulose pulp was dissolved in 470wt parts of a 10,2% water solution of sodium hydroxide containing 30wt parts of urea and 5,3wt parts of ZnO at 0°C. The dissolving time was 30 minutes. An alkaline cellulose solution was obtained at 6°C, containing 4,71 % of α-cellulose and 7,94% sodium hydroxide with viscosity of 268 sec at 8°C, clogging value Kw*=145, and 48 hours stability at 15°C. After 10 hours of deareating at 15°C, a film was formed from the solution at 25°C in a coagulation bath containing an aqueous 12% solution of sulphuric acid.
30,1wt parts of cellulosic film, was obtained with following properties: moisture content of 8%, thickness 0,023 mm, breaking tension of 43,9 MPa and elongation at break 4,3%.

### Example 6.

100wt parts of spruce cellulose in sheets with following characteristic: moisture content of 5%, D̅P_{w}=577, WRV=65%, α-cellulose content of 94,0%, CrI=69,0%, E_{H}=18,3-21,4 kJ/mol were shredded in a Werner-Pfleiderer mill as in Example I. The obtained cellulose pulp was placed in a reactor with agitator and treated with 1900wt parts of a solution of cellulases from the Aspergillus niger strain with endo-1,4-β-glucanase activity of 1,9 U/cm³ with 5% concentration of cellulose in the suspension. The enzymatic treatment time was 180 minutes at 50°C and pH=4,8. The obtained cellulose suspension was purified as in Example I.
97,1wt parts of the biotransformed white cellulose pulp were obtained characterized by: 6% of moisture content, D̅P_{w}=387, WRV=81,0%, CrI=70,2%, E_{H}=12,7-14,5 kJ/mol and Sₐ=98%. To 33wt parts of the biotransformed cellulose with 6% moisture, 97 parts of water were added and cooled down to 1°C. The pulp was next dissolved in 470wt parts of a 10,2% of aqueous sodium hydroxide, containing 30wt parts of urea and 5,3wt parts of ZnO at 0°C. The dissolving time was 30 minutes at agitating speed 120 rpm. An alkaline solution was obtained with temperature of 6,5°C, containing 5,2% of α-cellulose and 8,57% of sodium hydroxide characterized by: viscosity at 8°C of 221 seconds, Kw*=147, and stability at 15°C of 48 hours. The solution was filtered and 10 hours deaerated at 15°C, where after a cellulosic film was formed from the solution in lab-scale at 25°C . A 12% sulphuric acid solution was used as coagulation bath.
32,8wt parts of cellulosic film were obtained characterized by: thickness of 0,021 mm, breaking tension 42.1 MPa and elongation at break 5,5%.

### Example 7.

100wt parts of cellulose with properties as in Example I were shredded in a Werner- Pfleiderer mill as in Example I. The obtained cellulose pulp was placed in a reactor with agitator and subjected to the action of 1150wt parts of a 3: 1 mixture of xylanases from the Trichoderma reesei strain with endo-1,4-β-xylanase activity of 69,7 U/cm³ and cellulases from Aspergillus niger strain with endo-1,4-β-glucanase activity of 2,4 U/cm³ in an acetate buffer (pH=4,8). The enzymatic treatment time was 120 minutes at 50°C and pH=4,8. The obtained cellulose suspension was purified as in Example I. 96,2wt parts of white biotransformed cellulose pulp with 7,0% moisture were obtained with following characteristic: D̅P_{w}=469, WRV=86,4%, CrI=71,3%, E_{H}=12,2-16,7 kJ/mol and Sₐ=96%. To 30wt parts of the bio transformed cellulose pulp with 5% moisture, 100 parts of water were introduced and cooled down to 1 °C. The cellulose pulp was dissolved in 470wt parts of an 10,2% aqueous sodium hydroxide, containing 30wt parts of urea and 5,3wt parts of ZnO. The dissolving lasted 30 minutes with agitating speed 900 rpm. An alkaline cellulose solution was obtained at 6,5°C, containing 4,8% of α-cellulose and 8,16 % sodium hydroxide with following characteristic: viscosity at 8°C of 1280 seconds, Kw*=110, and stability at 15°C of 48 hours. The solution was filtered and 10 hours deaerated at 15°C, whereafter a cellulosic film was formed from the solution at 25°C in lab - scale. A 12% water solution of sulphuric acid was used as coagulation bath.
30,1wt parts of cellulosic film with 8% moisture were obtained with following characteristic: thickness of 0,031 mm, breaking tension 43,5 MPa and elongation at break 3,5%.

### Example 8.

100wt parts of an alkaline solution of the pulp modified as in Example VI were used for spinning of fibres with take-up speed 20 m/minute in a spinning bath containing 12% sulphuric acid and 4,4% sodium sulphate. A spinneret with 1000 holes each 0,065 mm in diameter was used for the spinning. The obtained continuous fibres were purified in a water bath; a spin-finish was applied on the fibres. The fibres were dried at 50°C eventually.
59,1 wt parts of cellulosic fibres were obtained with following properties: moisture content of 12%, titre of 3,42 dtex, tenacity 12,6 cN/tex and elongation 14,5 %.

### Example 9.

100wt parts of the alkaline cellulose solution as in Example VI was diluted in the proportion 1 : 3 and used for the manufacture of cellulosic beads. A spinneret with 100 capillaries each 1 mm in diameter was used for the forming of beads at 25°C in a 12% aqueous solution of sulphuric acid. The beads were afterwards washed with water. 74,0wt parts of wet beads were received. The beads contained 7% of cellulose, were 4-5 mm in diameter and had WRV=856%.

### Example 10.

100wt parts of the alkaline cellulose solution as in Example IV was used for the manufacture of cellulosic fibrids using a device with 100 holes spinneret with 0,09 mm diameter. The fibrids were formed in temperature of 35°C in 12% aqueous sulphuric acid and washed with water afterwards. 65wt parts of fibrids were obtained with a diameter of 10 µm, length of 500 µm, containing 7 % of moisture and with the WRV equal to 321%.

## Claims

1. A method for the manufacture of fibres, film and other products from modified soluble cellulose by means of its enzymatic treatment, dissolving in aqueous alkaline solutions and coagulating from the alkaline solutions **characterized in that** the starting cellulose pulp is subjected to a pretreatment by swelling in aqueous solution of cellulases and/or xylanases, preferably originated from Aspergillus niger or Trichoderma reesei with endo-1,4-β-glucanase activity not lower than 0,05 U/cm³ and endo-1,4-β-xylanse activity not lower than 0, 1 U/cm³, during 1 - 1440 minutes at 10-60 °C, and next, after the removal of solution the cellulose pulp is shredded at 20 - 40°C during 1 - 360 minutes, and, next, the pretreated cellulose pulp is enzymatically treated with an aqueous solution of an enzyme complex of cellulases type, preferably originated from the Aspergillus niger or Trichoderma reesei fungi, with endo-1,4-β-glucanase activity not lower than 0, 1 U/cm³, β-glucosidase activity not lower than 0,01 U/cm³, filter paper activity FPA not lower than 0,01 U/cm³ and/or xylanases preferably originated from Trichoderma reesei fungi, with endo-1,4-β-xylanase activity not lower than 0,5 U/cm³, whereafter the surplus of the enzyme solution is removed and the enzymes remaining in the cellulose are deactivated by washing with water with temperature above 60 °C and next the modified cellulose pulp, **characterized by** average polymerization degree not lower than 200, polydispersity degree not lower than 2, water retention value WRV not lower then 50%, energy of hydrogen bonds E_{H} not higher than 20 kj/mol, and moisture content not lower than 5 wt%, is dissolved in aqueous solution of hydroxides of alkali metals, preferably sodium hydroxide with concentration-not lower than 5 wt% at a temperature not lower than 0°C, during at least 1 minute, where after the thus obtained alkaline solution of cellulose is filtered and deaerated and next coagulated in water or an aqueous solution of an acid, preferably sulfuric acid with concentration not lower than 1 wt% and the obtained cellulosic products are washed to a neutral reaction and optionally dried.

2. A method according to Claim 1, wherein the enzymatic treatment of the cellulose is accomplished in aqueous suspension of an enzyme complex with the cellulose concentration not lower than 0,1 % with continuous agitating and/or recycling of the aqueous enzymatic solution at a temperature not lower than 10 °C, during not shorter than 1 minute, at pH not higher than 7.

3. A method according to Claim 1 wherein the surplus of the enzyme complex, after the enzymatic treatment, is recirculated to the process with simultaneous supplementing of the enzymes to level their activity.

4. A method according to Claim 1 wherein the aqueous solution of alkali metal hydroxides contains less then 0,01 wt%, of zinc oxide and/or not lower than 0,1 wt%, of urea.

5. A method according to Claim 1, wherein the modified cellulose pulp is dissolved in an aqueous solutions of alkali metal hydroxides with intensive agitating at speed not lower than 100 rpm.

6. A method according to Claim 1 wherein the dissolving of the modified cellulose pulp in the aqueous solution of alkali metal hydroxides proceeds with the temperature increasing from 5 - 12 °C at the end of the dissolving.

7. A method according to Claim 1 wherein during the forming of fibres or film a drawing is applied not less than 10%.

## Patentansprüche

1. Verfahren zur Herstellung von Fasern, Folien und anderen Produkten aus modifizierter, löslicher Cellulose durch deren enzymatische Behandlung, Auflösung in wässrigen, alkalischen Lösungen und Koagulation aus den alkalischen Lösungen, **dadurch gekennzeichnet, dass** die anfängliche Cellulosepulpe einer Vorbehandlung unterzogen wird durch Quellen in wässriger Lösung von Cellulasen und/oder Xylanasen, vorzugsweise entstammend von Aspergillus niger oder Trichoderma reesei mit einer Endo-1,4-Beta-Glucanase-Aktivität nicht niedriger als 0,05 U/cm³ und einer Endo-1,4-Beta-Xylanase-Aktivität nicht niedriger als 0,1 U/cm³, für 1 bis 1440 Minuten bei 10 bis 60°C und anschließend, nach der Entfernung von Lösung, wird die Cellulosepulpe bei 20 bis 40°C für 1 bis 360 Minuten geschreddert und wobei als nächstes die vorbehandelte Cellulosepulpe enzymatisch mit einer wässrigen Lösung eines Enzymkomplexes des Cellulase-Typs behandelt wird, vorzugsweise entstammend von Aspergillus niger oder Trichoderma reesei fungi, mit einer Endo-1,4-Beta-Glucanase-Aktivität nicht niedriger als 0,1 U/cm³, Beta-Glucosidase-Aktivität nicht niedriger als 0,01 U/cm³, Filter-Papier-Aktivität FPA nicht niedriger als 0,01 U/cm³ und/oder Xylanasen, vorzugsweise entstammend von Trichoderma reesei fungi, mit einer Endo-1,4-Beta-Xylanase-Aktivität nicht niedriger als 0,5 U/cm³, wonach der Überschuss der Enzymlösung entfernt wird und die verbleibenden Enzyme in der Cellulose durch Waschen mit Wasser mit einer Temperatur von oberhalb 60°C deaktiviert werden und wobei als nächstes die modifizierte Cellulosepulpe, **gekennzeichnet durch** einen mittleren Polymerisationsgrad von nicht weniger als 200, einem Polydispersitätsgrad von nicht weniger als 2, einen Wasser-Rückhaltewert WRW nicht geringer als 50%, eine Energie der Wasserstoffbindungen E_{H} nicht größer als 20 kJ/mol und einen Feuchtigkeits-Gehalt nicht niedriger als 5 Gew.-%, in einer wässrigen Lösung von Hydroxiden von Alkalimetallen, vorzugsweise Natriumhydroxid mit einer Konzentration nicht geringer als 5 Gew.-% bei einer Temperatur nicht niedriger als 0°C, für mindestens eine Minute aufgelöst wird, wonach die so erhaltene alkalische Lösung der Cellulose gefiltert und entgast und als nächstes in Wasser oder einer wässrigen Lösung einer Säure koaguliert wird, vorzugsweise in Schwefelsäure mit einer Konzentration nicht niedriger als 1 Gew.-%, und die erhaltenen cellulosischen Produkte bis zu einer Neutralreaktion gewaschen und optional getrocknet werden.

2. Ein Verfahren nach Anspruch 1, wobei die enzymatische Behandlung der Cellulose vorgenommen wird in einer wässrigen Suspension eines Enzymkomplexes mit einer Cellulosekonzentration nicht niedriger als 0,1 % unter kontinuierlichem Bewegen und/oder Rezyklieren der wässrigen enzymatischen Lösung bei einer Temperatur nicht niedriger als 10°C für nicht weniger als 1 Minute bei einem pH von nicht mehr als 7.

3. Ein Verfahren nach Anspruch 1, wobei der Überschuss des Enzymkomplexes, nach der enzymatischen Behandlung, dem Prozess wieder zugeführt wird mit gleichzeitiger Ergänzung der Enzyme, um deren Aktivität gleich zu halten.

4. Ein Verfahren nach Anspruch 1, wobei die wässrige Lösung der Alkalimetallhydroxide weniger als 0,01 Gew.-% Zinkoxid und/oder nicht weniger als 0,1 Gew.-% Harnstoff enthält.

5. Ein Verfahren nach Anspruch 1, wobei die modifizierte Cellulosepulpe aufgelöst wird in einer wässrigen Lösung von Alkalimetallhydroxiden unter intensiver Bewegung mit einer Geschwindigkeit von nicht niedriger als 100 rpm.

6. Ein Verfahren nach Anspruch 1, wobei das Auflösen der modifizierten Cellulosepulpe in der wässrigen Lösung von Alkalimetallhydroxiden vollzogen wird mit dem Ansteigen der Temperatur von 5 bis 12°C am Ende des Auflösens.

7. Ein Verfahren nach Anspruch 1, wobei während der Ausbildung der Fasern oder Folie eine Streckung von nicht weniger als 10 % angewendet wird.

## Revendications

1. Une méthode pour la fabrication de fibres, de pellicules et d'autres produits de cellulose soluble, modifiée par traitement enzymatique, étant dissolue dans des solutions alcalines aqueuses et coagulée de ces solutions alcalines, **caractérisée par le fait que** la pâte de cellulose est soumise d'abord à un pré-traitement, en la faisant gonfler dans une solution aqueuse de cellulases et/ou de xylanases, préférablement d'origine d'aspergillus niger ou de trichoderma reesei avec une endo-activité de glucanase 1,4 β, non inférieure à 0,05 U/cm³ et une endo-activité de xylanase 1,4 β, non inférieure à 0,1 U/cm³, durant 1 à 1440 minutes à une température de 10 à 60°C, et qui, après avoir éliminé la solution, est broyée de 20 à 40°C pendant 1 à 360 minutes; ensuite, la pâte de cellulose pré-traitée, est soumise à un traitement enzymatique avec une solution aqueuse d'un complexe d'enzymes de type cellulase, préférablement d'origine d'aspergillus niger ou de trichoderma reesei fungi, avec une endo-activité de glucanase 1,4 β, non inférieure à 0,1 U/cm³, une endo-activité de glucosidase β, non inférieure à 0,01 U/cm³, une activité du papier filtre FPA non inférieure à 0,1 U/cm³ et/ou de xylanases préférablement d'origine de Trichoderma reesei fungi, à endo-activité de xylanase 1,4 β, non inférieure à 0,5 U/cm³ , dont le surplus de la solution enzymatique est éliminé et les enzymes restants dans la cellulose sont désactivés par lavage à l'eau, à une température supérieure à 60°C, et ensuite la pâte de cellulose, **caractérisée par** un degré de polymérisation moyen non inférieur à 200, un degré de polydispersité non inférieur à 2, une capacité de rétention d'eau WRV non inférieure à 50 %, une énergie des liaisons d'hydrogène E_{H} non supérieure à 20 kJ/mol. et un contenu d'humidité non inférieur à 5 % en poids, est dissolu dans une solution aqueuse d'hydroxydes de métaux alcalins, préférablement de l'hydroxyde de sodium, à concentration non inférieure à 5 % en poids, à une température non inférieure à 0°C, durant une minute au moins, dont la solution alcaline de cellulose ainsi obtenue est filtrée et désaérée, puis coagulée dans de l'eau ou dans une solution aqueuse d'acide, préférablement de l'acide sulfurique ayant une concentration non inférieure à 1 % en poids, et les produits cellulosiques ainsi obtenus sont lavés jusqu'à obtenir une réaction neutre, et puis éventuellement séchés.

2. Une méthode conformément à la revendication1, **caractérisée par le fait que** le traitement enzymatique de la cellulose est réalisé dans une suspension aqueuse d'un complexe d'enzymes avec une concentration de cellulose non inférieure à 0,1 %, en l'agitant continuellement et/ou par recyclage de la solution aqueuse enzymatique à une température non inférieure à 10°C, pendant une minute au moins, avec un pH non supérieur à 7.

3. Une méthode conformément à la revendication 1, **caractérisée par le fait que** le surplus du complexe d'enzymes, après le traitement enzymatique, est réincorporé au processus, en ajoutant les enzymes simultanément, afin de conserver leur activité.

4. Une méthode conformément à la revendication1, **caractérisée par le fait que** la solution aqueuse à hydroxydes de métal alcalin contient moins de 0,01 % en poids d'oxyde de zinc et/ou de l'urée non inférieure à 0,1 % en poids.

5. Une méthode conformément à la revendication1, **caractérisée par le fait que** la pâte de cellulose modifiée est dissoute dans une solution aqueuse d'hydroxydes de métal alcalin, en l'agitant vivement à une vitesse non inférieure de 100 rpm.

6. Une méthode conformément à la revendication1, **caractérisée par le fait que** la dissolution de la pâte de cellulose, modifiée dans une solution aqueuse d'hydroxydes de métal alcalin, est réalisée par augmentation de la température de 5 - 12 °C à la fin du processus.

7. Une méthode conformément à la revendication 1, **caractérisée par le fait que** pendant la formation des fibres ou des pellicules, une traction non inférieure à 10% est appliquée sur le produit.
